# EUROPEAN PATENT APPLICATION

(11) **EP 4 375 614 A1**
(43) Date of publication of application: **29.05.2024**
(21) Application number: 23786996.1
(22) Date of filing: 30.03.2023
(51) Int. Cl.: G01B 21/04

(54) **BATTERY POSITIONING METHOD AND APPARATUS, DEVICE, STORAGE MEDIUM, AND BATTERY SWAP STATION**

(30) Priority: 12.10.2022 CN 202211249731
(71) Applicant: Sany Lithium Energy Co., Ltd., Changsha, Hunan 410100 (CN)
(72) Inventor: LIU, Jie, Changsha, Hunan 410100 (CN); ZHANG, Lulu, Changsha, Hunan 410100 (CN); YANG, Yong, Changsha, Hunan 410100 (CN)
(74) Representative: Osterhoff, Utz
(86) International application number: PCT/CN2023/085062
(87) International publication number: WO 2024/077884

(57) **Abstract**

The present application provides a battery positioning method, a battery positioning apparatus, a battery positioning device, a storage medium and a battery replacement station. The method includes prepositioning a battery and a battery gripper, determining an initial center position coordinate of a battery frame and an initial center position coordinate of the battery gripper, wherein the battery gripper is configured to grip the battery frame, and a plurality of distance detection apparatuses are provided on the battery gripper; controlling the battery gripper to walk along a transportation direction of the battery from the initial center position coordinate of the battery gripper to the initial center position coordinate of the battery frame; in response to the battery gripper walking to a target position, controlling the battery gripper to translate from the target position to the initial center position coordinate of the battery frame along a vertical direction of the transportation direction.

## Description

### TECHNICAL FIELD

The present application relates to the technical field of battery replacement, and in particular to a battery positioning method, a battery positioning apparatus, a battery positioning device, a storage medium and a battery replacement station.

### BACKGROUND

Electric working machines adopt power batteries as the power source. The working time in pure electric working mode is affected by the battery capacity. If the charging method is adopted, it generally cannot meet the customer's continuous working time requirements for electric working machines. In order to solve the problem of power battery working time, the electric working machines can adopt a battery replacement solution, that is, by replacing the vehicle-mounted power battery to achieve continuous operation. At present, most methods use camera recognition to detect the battery frame, and then control the battery gripper to grab the battery frame.

However, the method of camera recognition is greatly affected by the environment and light, thereby affecting the efficiency of battery replacement.

### SUMMARY

The embodiments of the present application provide a battery positioning method, a battery positioning apparatus, a battery positioning device, a storage medium and a battery replacement station to solve the problem of low battery replacement efficiency in the related art.

The embodiments of the present application provide a battery positioning method, including: prepositioning a battery and a battery gripper, determining an initial center position coordinate of a battery frame and an initial center position coordinate of the battery gripper, the battery gripper is configured to grip the battery frame, and a plurality of distance detection apparatuses are provided on the battery gripper;
controlling the battery gripper to walk along a transportation direction of the battery from the initial center position coordinate of the battery gripper to the initial center position coordinate of the battery frame;
in response to the battery gripper walking to a target position, controlling the battery gripper to translate from the target position to the initial center position coordinate of the battery frame along a direction perpendicular to the transportation direction;
in response to the battery gripper being translating, fitting to obtain a first short side of the battery frame and a first long side perpendicular to the first short side or a second long side respectively based on a detection result of the plurality of distance detection apparatuses; and
fitting to obtain an actual center position coordinate of the battery frame based on a preset battery frame size, the first short side, the first long side or the second long side.

According to the battery positioning method provided by the embodiments of the present application, the gripper and the battery frame are both rectangular frames, and the rectangular frame includes a first short side, a first long side, and a second short side and a second long side connected in sequence;
a first distance detection apparatus is provided on the first short side of the battery gripper, a second distance detection apparatus is provided on the second short side, and a third distance detection apparatus and a fourth distance detection apparatus are provided on the first long side; and a fifth distance detection apparatus and a sixth distance detection apparatus are provided on the second long side.

According to the battery positioning method provided by the embodiments of the present application, the plurality of distance detection apparatuses include at least two distance detection apparatuses,
the fitting to obtain the first short side of the battery frame based on the detection result of the plurality of distance detection apparatuses includes:
in response to detecting that the at least two distance detection apparatuses pass the first short side, determining a short side position coordinate of each of the at least two distance detection apparatuses when passing the first short side; and
fitting to obtain the first short side by using a least squares method based on at least two short side position coordinates.

According to the battery positioning method provided by the embodiments of the present application, the fitting to obtain the first long side perpendicular to the first short side or the second long side based on the detection result of the plurality of distance detection apparatuses includes:
determining an inclination angle of the battery gripper relative to the battery frame based on the at least two short side position coordinates, and rotating the battery gripper based on the inclination angle;
in response to that a rotation of the battery gripper is completed, determining long side detection results of the third distance detection apparatus, the fourth distance detection apparatus, the fifth distance detection apparatus and the sixth distance detection apparatus respectively;
controlling the battery gripper to walk toward a long side of the battery frame that is not detected based on the long side detection result;
in response to detecting that the at least two distance detection apparatuses pass through the first long side or the second long side, determining a long side position coordinate of each of the distance detection apparatus when passing through the first long side or the second long side; and
fitting to obtain the first long side perpendicular to the first short side or the second long side by using the least squares method based on at least two long side position coordinates.

According to the battery positioning method provided by the embodiments of the present application, after the fitting to obtain the actual center position coordinate of the battery frame, the method further includes:
determining each axis coordinate of a moving apparatus of the battery gripper through coordinate transformation based on the actual center position coordinate of the battery frame; and
controlling the current center position coordinate of the battery gripper to move to the actual center position coordinate of the battery frame based on the each axis coordinate.

According to the battery positioning method provided by the embodiments of the present application, after controlling the current center position coordinate of the battery gripper to move to the actual center position coordinate of the battery frame, the method further includes:
detecting the detection result of each distance detection apparatus in the plurality of distance detection apparatuses;
in response to each detection result being less than a preset value, determining that a battery gripper position calibration is completed, and
in response to there is detection result being greater than or equal to the preset value, adjusting the battery gripper position.

The embodiments of the present application further provide a battery positioning apparatus, including a prepositioning module, a control module, and a fitting module.

The prepositioning module is configured to preposition a battery and a battery gripper, and determine an initial center position coordinate of a battery frame of the battery and an initial center position coordinate of the battery gripper, the battery gripper is configured to grip the battery frame, and a plurality of distance detection apparatuses are provided on the battery gripper;

The control module is configured to control the battery gripper to walk along a transportation direction of the battery from the initial center position coordinate of the battery gripper to the initial center position coordinate of the battery frame; and in response to the battery gripper walking to a target position, control the battery gripper to translate from the target position to the initial center position coordinate of the battery frame along a direction perpendicular to the transportation direction; and

The fitting module is configured to in response to the battery gripper being translating, fit to obtain a first short side of the battery frame and a first long side perpendicular to the first short side or a second long side respectively based on a detection result of the plurality of distance detection apparatuses in response to the battery gripper being translating; and fit to obtain an actual center position coordinate of the battery frame based on a preset battery frame size, the first short side, the first long side or the second long side.

The embodiments of the present application further provide a battery positioning apparatus, the gripper and the battery frame are both rectangular frames, and the rectangular frame includes a first short side, a first long side, and a second short side and a second long side connected in sequence; a first distance detection apparatus is provided on the first short side of the battery gripper, a second distance detection apparatus is provided on the second short side, and a third distance detection apparatus and a fourth distance detection apparatus are provided on the first long side; and a fifth distance detection apparatus and a sixth distance detection apparatus are provided on the second long side.

The embodiments of the present application further provide a battery positioning apparatus, the plurality of distance detection apparatuses include at least two distance detection apparatuses,
the fitting module, configured to in response to detecting that the at least two distance detection apparatuses pass the first short side, determine a short side position coordinate of each of the at least two distance detection apparatuses when passing the first short side; and fit to obtain the first short side by using a least squares method based on at least two short side position coordinates.

The embodiments of the present application further provide a battery positioning apparatus, the fitting module is further configured to determine an inclination angle of the battery gripper relative to the battery frame based on the at least two short side position coordinates, and rotate the battery gripper based on the inclination angle; in response to that a rotation of the battery gripper is completed, determine long side detection results of the third distance detection apparatus, the fourth distance detection apparatus, the fifth distance detection apparatus and the sixth distance detection apparatus respectively; and control the battery gripper to walk toward a long side of the battery frame that is not detected based on the long side detection result; in response to detecting that the at least two distance detection apparatuses pass through the first long side or the second long side, determine a long side position coordinate of each of the distance detection apparatus when passing through the first long side or the second long side; and fit to obtain the first long side perpendicular to the first short side or the second long side by using the least squares method based on at least two long side position coordinates.

The embodiments of the present application further provide a battery positioning apparatus, further includes a grabbing module, the grabbing module is configured to determine each axis coordinate of a moving apparatus of the battery gripper through coordinate transformation based on the actual center position coordinate of the battery frame; and control the current center position coordinate of the battery gripper to move to the actual center position coordinate of the battery frame based on the each axis coordinate.

The embodiments of the present application further provide a battery positioning apparatus, further includes a calibration module, , the calibration module is configured to detect the detection result of each distance detection apparatus in the plurality of distance detection apparatuses; in response to each detection result being less than a preset value, determine that a battery gripper position calibration is completed, and in response to there is detection result being greater than or equal to the preset value, adjust the battery gripper position.

The embodiments of the present application further provide an electric device, including a memory, a processor and a computer program stored and operable on the processor, and when the program is executed by the processor, any one of the above-mentioned battery positioning methods is realized.

The embodiments of the present application further provide a non-transitory computer-readable storage medium storing a computer program, and when the computer program is executed by the processor, any one of the above-mentioned battery positioning methods is realized.

The embodiments of the present application further provide a computer program product including a computer program, and when the computer program is executed by a processor, any one of the above-mentioned battery positioning methods is realized.

The embodiments of the present application further provide a battery replacement station configured to implement any one of the above-mentioned battery positioning methods for battery replacement.

The embodiments of the present application provide a battery positioning method, a battery positioning apparatus, a battery positioning device, a storage medium and a battery replacement station. The method prepositions the battery and the battery gripper, determines the initial center position coordinate of the battery frame and the initial center position coordinate of the battery gripper, the battery gripper is configured to grip the battery frame, and the plurality of distance detection apparatuses are provided on the battery gripper; controls the battery gripper to walk along the transportation direction of the battery from the initial center position coordinate of the battery gripper to the initial center position coordinate of the battery frame; in response to the battery gripper walking to the target position, controls the battery gripper to translate from the target position to the initial center position coordinate of the battery frame along the direction perpendicular to the transportation direction; in response to the battery gripper being translating, fits to obtain the first short side of the battery frame and the first long side perpendicular to the first short side or the second long side respectively based on the detection result of the plurality of distance detection apparatuses; and fits to obtain the actual center position coordinate of the battery frame based on the preset battery frame size, the first short side, the first long side or the second long side. The method can effectively ensure the accuracy of obtaining the battery frame position, and can ensure that the accuracy is less sensitive to the environment light, thereby improving the battery replacement efficiency.

### BRIEF DESCRIPTION OF THE DRAWINGS

In order to more clearly illustrate the technical solutions in the embodiments of the present application or in the related art, drawings used in the embodiments or in the related art will be briefly described below. Obviously, the drawings in the following description are only some embodiments of the present application. It will be apparent to those skilled in the art that other figures can be obtained according to the structures shown in the drawings without creative work.
FIG. 1 is a schematic flowchart of a battery positioning method according to an embodiment of the present application.
FIG. 2 is a schematic diagram of a positioning principle of a battery gripper and a battery frame according to the embodiment of the present application.
FIG. 3 is a schematic structural diagram of a battery positioning apparatus according to the embodiment of the present application.
FIG. 4 is a schematic structural diagram of an electronic device according to the embodiment of the present application.

### DETAILED DESCRIPTION OF THE EMBODIMENTS

In order to make the purpose, technical solutions and advantages of the present application clearer, the technical solutions in the present application will be clearly and completely described below in conjunction with the accompanying drawings of the present application. Obviously, the described embodiments are part of the embodiments of the present application, not all of the embodiments. Based on the embodiments of the present application, all other embodiments obtained by those of ordinary skill in the art without making creative efforts fall within the scope of protection of the present application.

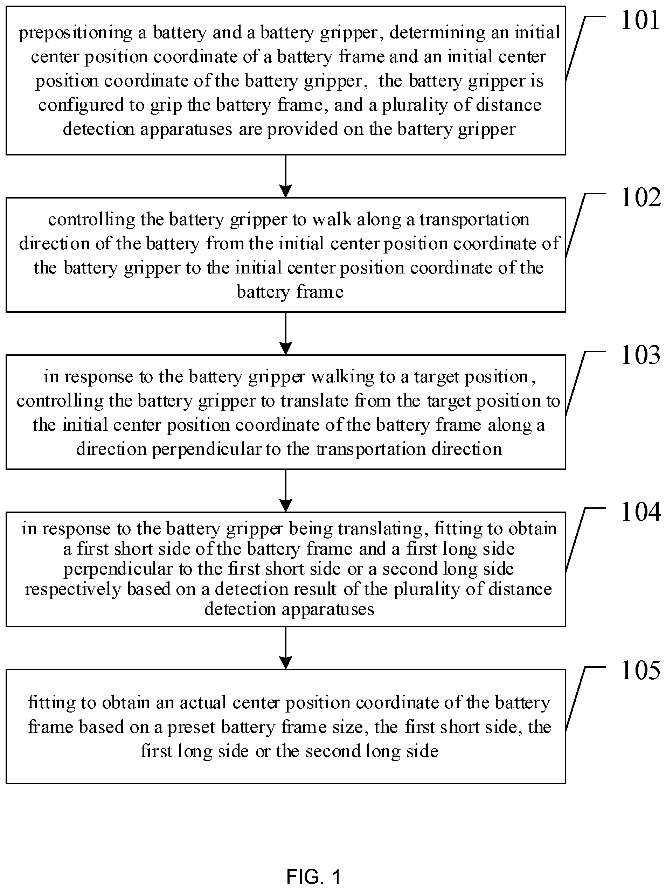

A battery positioning method, a battery positioning apparatus, a battery positioning device, a storage medium and a battery replacement station according to the embodiments of the present application are described with reference to FIGS. 1 to 4.

Power batteries on working machines are generally assembled using a frame structure, and the frame structure is defined as a battery frame. The replacement of the power battery on the working machine can be completed by positioning, grabbing and hoisting the battery frame. The battery frame is generally located at a back part of the front of the car. When a working machine enters a battery replacement station, it needs to enter a designated battery replacement parking area, and a specialized battery replacement apparatus will perform the battery replacement operation.

The battery replacement apparatus generally includes a battery grabber and a moving apparatus. The battery grabber is provided on the moving apparatus and is configured to grab the battery frame containing the power battery. The moving apparatus is configured to move between the power battery storage place and the battery replacement parking area to complete the transportation of the power battery. The moving apparatus may include a cart and a trolley. For example, the cart controls the battery gripper to move forward and backward, and the trolley controls the gripper to move left and right. At this time, the operation of the operating machinery equipped with the power battery is moving in a direction of front-to-rear.

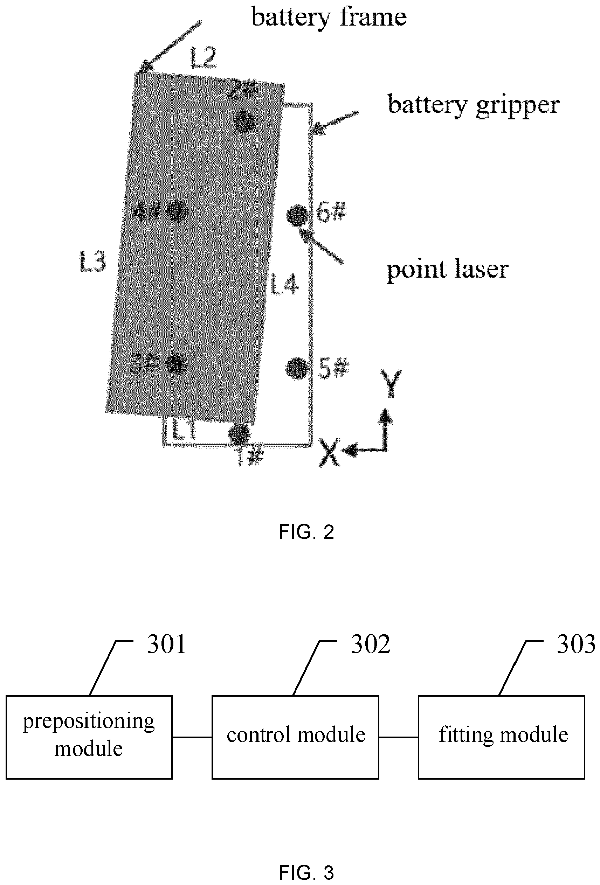

FIG. 1 is schematic flowchart of a battery positioning method according to an embodiment of the present application. FIG. 2 is a schematic diagram of a positioning principle of a battery gripper and a battery frame according to the embodiment of the present application.

As shown in FIG. 1, a battery positioning method is provided by the embodiment. The execution subject may be a battery replacement station control system, and the method mainly includes the following steps.

101, prepositioning a battery and a battery gripper, determining an initial center position coordinate of a battery frame and an initial center position coordinate of the battery gripper, the battery gripper is configured to grip the battery frame, and a plurality of distance detection apparatuses are provided on the battery gripper.

Specifically, a spatial coordinate system is first established, and the operating machinery, battery, battery gripper and moving apparatus carrying the battery are established in the same coordinate system. The parking position of the operating machinery is fixed, and the position of the battery gripper when not working is fixed. Therefore, the positions of the battery and the battery gripper in the coordinate system at the initial moment are determined. Therefore, the initial center position coordinate of the battery frame and the initial center position coordinate of the battery gripper can be determined. The plurality of distance detection apparatuses are provided on the battery gripper. Since the installation position of each distance detection apparatus is fixed, the position coordinate changes of each distance detection apparatus are also determined.

The function of the distance detection apparatus is to detect the distance value between the gripper and the battery frame. The process of establishing a spatial coordinate system can be determining the relative positional relationship of each apparatus through different sensors in the power exchange space. Based on the relative positional relationship and the size specifications of each apparatus, a spatial coordinate system is established so that the spatial coordinate system can cover all devices in the battery replacement space.

The function of prepositioning is to preliminary position the battery frame and battery gripper, and the positioning result is not the final result. Prepositioning means first determining the approximate position of the battery frame and battery gripper, and then performing precise positioning control.

102, controlling the battery gripper to walk along a transportation direction of the battery from the initial center position coordinate of the battery gripper to the initial center position coordinate of the battery frame.

Specifically, after the prepositioning is completed, the battery gripper must be controlled to move according to the prepositioning result. The walking direction refers to the direction consistent with the direction of the operating machine transporting the battery, and the translation direction refers to the direction perpendicular to the walking direction, which can be understood as the walking direction is on the X-axis, and the translation direction is on the Y-axis.

Taking the spatial coordinates as a three-dimensional coordinate system as an example, to complete the final movement of the battery gripper, it is necessary to control the battery gripper to move in the three coordinate axes respectively, and then the battery gripper can be controlled to complete grabbing the battery frame. Therefore, after the prepositioning is completed, the battery gripper is first controlled to move on the X-axis to the target position.

103, in response to the battery gripper walking to a target position, controlling the battery gripper to translate from the target position to the initial center position coordinate of the battery frame along a direction perpendicular to the transportation direction.

Specifically, when the battery gripper walks to the target position, that is, the battery gripper walks in place along the first direction. At this time, it is necessary to control the gripper to translate in the second direction, that is, the direction perpendicular to the first direction, in order to control the battery gripper to move in two directions, and to move the battery gripper directly above the battery frame, making it easier to control the battery gripper to grab the battery frame.

104, in response to the battery gripper being translating, fitting to obtain a first short side of the battery frame and a first long side perpendicular to the first short side or a second long side respectively based on a detection result of the plurality of distance detection apparatuses.

As shown in FIG. 2, 1# represents the first distance detection apparatus, 2# represents the second distance detection apparatus, 3# represents the third distance detection apparatus, 4# represents the fourth distance detection apparatus, and 5# represents the fifth distance detection apparatus. 6# represents the sixth distance detection apparatus, L1 represents the first short side, L2 represents the second short side, L3 represents the first long side, and L4 represents the second long side.

The plurality of distance detection apparatuses are provided on the battery gripper. The distance detection apparatus detects the distance between the battery gripper and the battery frame. When the top view of the battery gripper overlaps or partially overlaps with the top view of the battery frame, the distance value detected by the distance detection apparatus is a value within a preset interval. If the distance value detected by the distance detection apparatus is greater than the value within the preset interval, it indicates that the battery gripper position corresponding to the distance sensor does not coincide with the battery frame.

As shown in FIG. 2, the process of translation of the battery gripper is that controls the translation direction of the 2# distance detection apparatus from the L1 side to the L2 side. During the translation process, the six distance detection apparatuses will produce different detection results. Therefore, according to the distance values detected by different distance detection apparatuses, it can be obtained at which time the distance detection apparatus passed the L1 side and the L2 side. Taking the 2# distance detection apparatus as an example, when the 2# distance detection apparatus passes through the L1 side, the detection result of the distance detection apparatus will mutate, that is, from a large distance value to a small distance value, which means 2 # distance detection apparatus has passed the L1 side. Similarly, 3# and 4# are the same principles and will not be explained one by one. When the detection result of the 2# distance detection apparatus suddenly changes for the second time, it indicates that the 2# distance detection apparatus has passed through the L2 side of the battery frame. At the same time, the 3# and 4# distance detection apparatuses also pass through the L1 side. Therefore, the L1 side can be obtained by fitting according to the detection results of the plurality of different distance detection apparatuses.

When the L1 side is obtained through fitting, the 2# distance detection apparatus is translated to the L2 side at the same time. Therefore, at this time, it is necessary to control the battery gripper to walk in the direction of L3 or L4. When walking, there will also be the plurality of distance detection apparatuses detecting. to obtain different distance detection results. Similarly, the L3 side or the L4 side can be obtained by fitting using different distance detection results.

105, fitting to obtain an actual center position coordinate of the battery frame based on a preset battery frame size, the first short side, the first long side or the second long side.

Since the size of the battery frame is known, that is, the preset battery frame size is a known value, and after the above calculation, any one of the first short side, the first long side, and the second long side is a known value. Therefore, the shape outline of the battery frame and the actual center position coordinate of the battery frame can be obtained based on the three fittings.

The battery frame is a rectangular frame with the same shape as the battery gripper. When the two intersecting sides of the rectangular frame are known and the length of each side of the rectangular frame is known, the specific rectangular frame shape, that is, the specific position, can be calculated quickly through geometric operations. The center position of the rectangular frame can be determined, and the actual center position coordinate of the battery frame can be obtained.

The battery positioning method of this embodiment is positioned by fitting the battery frame, which is not affected by the environment and light, and fit any two overlapping sides, that is, the final battery frame can be obtained, which effectively improves the efficiency of the frame positioning efficiency, thereby improving the efficiency of battery grabbing and replacement.

Further, based on the above embodiment, both the gripper and the battery frame are rectangular frames, and the rectangular frame includes a first short side, a first long side, a second short side and a second long side connected in sequence. A first distance detection apparatus is provided on the first short side of the battery gripper, a second distance detection apparatus is provided on the second short side, a third distance detection apparatus and a fourth distance detection apparatus are provided on the first long side, and the fifth distance detection apparatus and a sixth distance detection apparatus are provided on the second long side.

As shown in FIG. 2, the first distance detection apparatus can be provided at the middle point of the first short side, the second distance detection apparatus can be provided at the middle point of the second short side, the third distance detection apparatus and the fourth distance detection apparatus are provided on the trisection points of the first long side. The fourth distance detection apparatus and the fifth distance detection apparatus are provided at the trisection points of the second long side. The distance detection apparatuses are evenly provided on the side of the battery gripper to ensure that the battery gripper accurately grasps the battery frame. If the detection results of the six distance detection apparatuses are all less than the preset distance value, it indicates that the battery gripper at this time corresponds to the position of the battery frame. At this time, the battery gripper is controlled to be lowered, and the battery frame can be successfully grasped. Evenly setting the distance detection apparatus can also improve the efficiency of battery grasping.

Further, based on the above embodiment, the plurality of distance detection apparatuses include at least two distance detection apparatuses, the fitting to obtain the first short side of the battery frame based on the detection result of the plurality of distance detection apparatuses includes: in response to detecting that the at least two distance detection apparatuses pass the first short side, determining a short side position coordinate of each of the at least two distance detection apparatuses when passing the first short side; and fitting to obtain the first short side by using a least squares method based on at least two short side position coordinates.

As shown in FIG. 2, the initial center position coordinate of the battery gripper are known. Since the installation positions of each distance detection apparatus on the battery gripper are fixed, the position coordinate of each distance detection apparatus is also known, and the walking distance of controlling the battery gripper is determined. Therefore, when the battery gripper walks to the target position, the real-time coordinates of the battery gripper at the target position can be quickly calculated.

When controlling the battery gripper to translate, detect the position coordinate when the distance detection apparatus passes the first short side, as shown in FIG. 2, that is, the real-time coordinates of the second distance detection apparatus, the third distance detection apparatus and the fourth distance detection apparatus when passing the first short side L1 respectively is the short side coordinate. Then, the first short side of the battery frame is obtained by combining at least two short side coordinates with the least squares method for fitting. The least squares method matches the best function of the data by minimizing the square of the error. The least squares method can be used to easily obtain unknown data, and minimize the sum of the squares of the errors between the obtained data and the actual data. Therefore, the first short side L1 can be quickly obtained by fitting using the least squares method.

Further, on the basis of the above embodiment, in this embodiment, the fitting to obtain the first long side perpendicular to the first short side or the second long side based on the detection result of the plurality of distance detection apparatuses includes: determining an inclination angle of the battery gripper relative to the battery frame based on the at least two short side position coordinate, and rotating the battery gripper based on the inclination angle; in response to that a rotation of the battery gripper is completed, determining long side detection results of the third distance detection apparatus, the fourth distance detection apparatus, the fifth distance detection apparatus and the sixth distance detection apparatus respectively; controlling the battery gripper to walk toward a long side of the battery frame that is not detected based on the long side detection result; in response to detecting that the at least two distance detection apparatuses pass through the first long side or the second long side, determining a long side position coordinate of each of the distance detection apparatus when passing through the first long side or the second long side; and fitting to obtain the first long side perpendicular to the first short side or the second long side by using the least squares method based on at least two long side position coordinates.

Specifically, after obtaining the first short side, it is necessary to determine any long side adjacent to the first short side. As shown in FIG. 2, there is a certain angle between the battery gripper and the battery frame. Therefore, it is necessary to adjust the position of the battery gripper, the inclination angle of the battery frame can be calculated through the coordinates of any two short sides, such as the X-axis and Y-axis in FIG. 2, and the coordinates of any two points on any L1 side can be obtained, thereby calculating the inclination angle of side L1 quickly. Then the battery gripper can be controlled to rotate according to the inclination angle so that the battery gripper matches the battery frame.

After the battery gripper rotates to match the battery frame, the battery gripper needs to be controlled to walk, that is, the battery gripper needs to be controlled to walk in the direction of the first long side or the second long side. The specific method of controlling the walking direction of the battery gripper can be: determining the detection results of the distance detection apparatus on the first long side and the second long side respectively, and controlling the battery gripper to move from the side with the a large value distance detection result to the side with a less value distance detection result. As shown in FIG. 2, that is, controlling the battery gripper to walk from the side of L4 to the side of L3. The distance detection result value on the side where the battery frame is not detected is greater than the distance detection result value on the side where the battery frame is detected.

Similarly, in the process of controlling the battery gripper to walk in the direction of L3 or L4, there will also be different distance detection apparatuses passing through the first long side or the second long side. In a same way of determining the first short side, after obtaining at least two long side position coordinates when the distance detection apparatus passes through the first long side or the second long side, the least squares method is used to combine the at least two long side position coordinates, and the first long side or the second long side can be obtained by fitting. Only one of the long sides needs to be obtained by fitting, and the long side obtained by fitting intersects with the short side, that is, the first short side is perpendicular to the first long side obtained by fitting or the second longest side obtained by fitting.

Further, on the basis of the above embodiment, in this embodiment, after the fitting to obtain the actual center position coordinate of the battery frame, the method further includes: determining each axis coordinate of a moving apparatus of the battery gripper through coordinate transformation based on the actual center position coordinate of the battery frame; and controlling the current center position coordinate of the battery gripper to move to the actual center position coordinate of the battery frame based on the each axis coordinate.

Specifically, after fitting one short side and one long side of the battery frame, the overall outline of the battery frame can be obtained, and then the actual center position coordinate of the battery frame can be obtained. After obtaining the actual center position coordinate of the battery frame, since the orientation of the battery gripper has been adjusted to be consistent with the orientation of the battery frame, it is only necessary to control the current center position coordinate of the battery gripper to be consistent with the actual center position coordinate of the battery frame. The control of the battery gripper movement includes the cart servo in the walking direction, the trolley servo in the translation direction, the gripper lifting servo in the lifting and descending direction, and the rotation servo in the angle rotation. Therefore, it is only necessary to control the axis coordinates of the corresponding different coordinate axes to move to the target position according to the actual center position coordinate of the battery frame. This realizes that the center of the battery gripper coincides with the center of the battery frame.

Further, based on the above embodiment, in this embodiment, after controlling the current center position coordinate of the battery gripper to move to the actual center position coordinate of the battery frame, the method further includes: detecting the detection result of each distance detection apparatus in the plurality of distance detection apparatuses; in response to each detection result being less than a preset value, determining that a battery gripper position calibration is completed, and in response to there is detection result being greater than or equal to the preset value, adjusting the battery gripper position.

When the center of the control battery gripper coincides with the center of the battery frame, if the positions of each side of the battery gripper correspond to the positions of each side of the battery frame, then the six distance detection apparatuses at this time should all detect the battery frame, that is, the difference in the distance detection results of the six distance detection apparatuses is small, and they are all within the preset distance range. If the distance detection results of any one or more of the distance detection apparatuses are too large, it indicates that the battery gripper at this time is deviated from the battery frame, so the angle of the battery gripper needs to be calibrated and adjusted. The calibration method is to control the battery gripper to rotate from the side where the detection result is greater than the preset value to the side where the detection result is less than the preset value, until all the distance values detected by the distance detection apparatus are all within the preset value eventually. At this time, it indicates that the battery frame can be detected by the distance detection apparatus, indicating that the battery gripper at this time completely matches the position of the battery frame, and the grabbing process only needs to control the battery gripper to be raised and lowered in a straight line in the vertical direction of the battery frame. By calibrating the position of the battery gripper, the efficiency of battery gripping can be effectively ensured, and the distance detection apparatus may be a point laser sensor.

Based on the same general inventive concept, embodiments of the present application further a battery positioning apparatus. The battery positioning apparatus provided by the embodiment of the present application is described below. The battery positioning apparatus described below and the battery positioning method described above can be referenced to each other.

FIG. 3 is a schematic structural diagram of a battery positioning apparatus according to the embodiment of the present application.

As shown in FIG. 3, an embodiment of the present application provides a battery positioning apparatus, including a prepositioning module 301, a control module 302, and a fitting module 303.

The prepositioning module 301 is configured to preposition a battery and a battery gripper, and determine an initial center position coordinate of a battery frame of the battery and an initial center position coordinate of the battery gripper, the battery gripper is configured to grip the battery frame, and a plurality of distance detection apparatuses are provided on the battery gripper;

The control module 302 is configured to control the battery gripper to walk along a transportation direction of the battery from the initial center position coordinate of the battery gripper to the initial center position coordinate of the battery frame; and in response to the battery gripper walking to a target position, control the battery gripper to translate from the target position to the initial center position coordinate of the battery frame along a vertical direction of the transportation direction;

The fitting module 303 is configured to in response to the battery gripper being translating, fit to obtain a first short side of the battery frame and a first long side perpendicular to the first short side or a second long side respectively based on a detection result of the plurality of distance detection apparatuses in response to the battery gripper being translating; and fit to obtain an actual center position coordinate of the battery frame based on a preset battery frame size, the first short side, the first long side or the second long side.

This embodiment provides the battery positioning apparatus, the apparatus prepositions the battery and the battery gripper, determines the initial center position coordinate of the battery frame and the initial center position coordinate of the battery gripper, the battery gripper is configured to grip the battery frame, and the plurality of distance detection apparatuses are provided on the battery gripper; controls the battery gripper to walk along the transportation direction of the battery from the initial center position coordinate of the battery gripper to the initial center position coordinate of the battery frame; in response to the battery gripper walking to the target position, controls the battery gripper to translate from the target position to the initial center position coordinate of the battery frame along the direction perpendicular to the transportation direction; in response to the battery gripper being translating, fits to obtain the first short side of the battery frame and the first long side perpendicular to the first short side or the second long side respectively based on the detection result of the plurality of distance detection apparatuses; and fits to obtain the actual center position coordinate of the battery frame based on the preset battery frame size, the first short side, the first long side or the second long side. The method can effectively ensure the accuracy of obtaining the battery frame position, and can ensure that the accuracy is less sensitive to the environment light, thereby improving the battery replacement efficiency.

Further, the gripper and the battery frame are both rectangular frames, and the rectangular frame includes a first short side, a first long side, and a second short side and a second long side connected in sequence.

A first distance detection apparatus is provided on the first short side of the battery gripper, a second distance detection apparatus is provided on the second short side, and a third distance detection apparatus and a fourth distance detection apparatus are provided on the first long side; and a fifth distance detection apparatus and a sixth distance detection apparatus are provided on the second long side.

Further, in this embodiment, the plurality of distance detection apparatuses include at least two distance detection apparatuses, and the fitting module 303 is specifically configured to:
in response to detecting that the at least two distance detection apparatuses pass the first short side, determine a short side position coordinate of each of the at least two distance detection apparatuses when passing the first short side; and
fit to obtain the first short side by using a least squares method based on at least two short side position coordinates.

Further, the fitting module 303 in this embodiment is specifically configured to:
determine an inclination angle of the battery gripper relative to the battery frame based on the at least two short side position coordinates, and rotate the battery gripper based on the inclination angle;
in response to that a rotation of the battery gripper is completed, determine long side detection results of the third distance detection apparatus, the fourth distance detection apparatus, the fifth distance detection apparatus and the sixth distance detection apparatus respectively; and
control the battery gripper to walk toward a long side of the battery frame that is not detected based on the long side detection result;
in response to detecting that the at least two distance detection apparatuses pass through the first long side or the second long side, determine a long side position coordinate of each of the distance detection apparatus when passing through the first long side or the second long side; and
fit to obtain the first long side perpendicular to the first short side or the second long side by using the least squares method based on at least two long side position coordinates.

Furthermore, this embodiment also includes a grabbing module, specifically configured to:
determine each axis coordinate of a moving apparatus of the battery gripper through coordinate transformation based on the actual center position coordinate of the battery frame; and
control the current center position coordinate of the battery gripper to move to the actual center position coordinate of the battery frame based on the each axis coordinate.

Furthermore, this embodiment also includes a calibration module, specifically configured to:
detect the detection result of each distance detection apparatus in the plurality of distance detection apparatuses;
in response to each detection result being less than a preset value, determine that a battery gripper position calibration is completed, and
in response to there is detection result being greater than or equal to the preset value, adjust the battery gripper position.

Based on the same general inventive concept, embodiments of the present application further provide a battery replacement station configured to perform the battery positioning method as described in any one of the above embodiments for battery replacement.

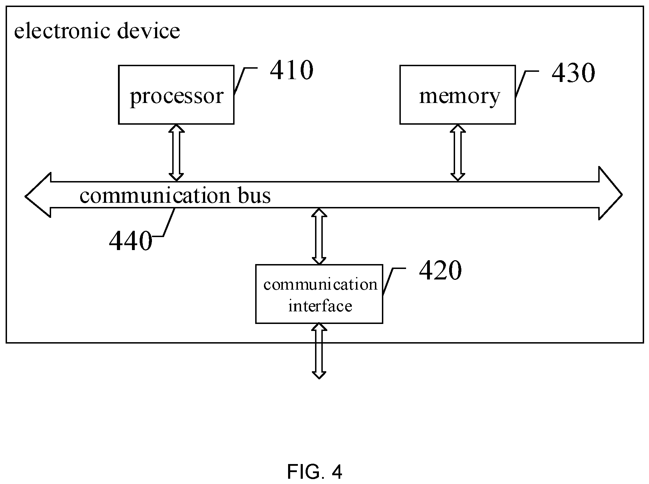

FIG. 4 is a schematic structural diagram of an electronic device according to the embodiment of the present application.

As shown in FIG. 4, the electronic device may include: a processor 410, a communication interface 420, a memory 430, and a communications bus 440. The processor 410, the communication interface 420, and the memory 430 pass through the communication bus 440 to complete mutual communication. The processor 410 can call the logical instructions in the memory 430 to execute the battery positioning method. The method includes: prepositioning a battery and a battery gripper, determining an initial center position coordinate of a battery frame and an initial center position coordinate of the battery gripper, the battery gripper is configured to grip the battery frame, and a plurality of distance detection apparatuses are provided on the battery gripper; controlling the battery gripper to walk along a transportation direction of the battery from the initial center position coordinate of the battery gripper to the initial center position coordinate of the battery frame; in response to the battery gripper walking to a target position, controlling the battery gripper to translate from the target position to the initial center position coordinate of the battery frame along a vertical direction of the transportation direction; in response to the battery gripper being translating, fitting to obtain a first short side of the battery frame and a first long side perpendicular to the first short side or a second long side respectively based on a detection result of the plurality of distance detection apparatuses; and fitting to obtain an actual center position coordinate of the battery frame based on a preset battery frame size, the first short side, the first long side or the second long side.

In addition, the above-mentioned logical instructions in the memory 430 can be implemented in the form of software functional units and can be stored in a computer-readable storage medium when sold or used as an independent product. Based on this understanding, the technical solution of the present application essentially or the part that contributes to the existing technology or the part of the technical solution can be embodied in the form of a software product. The computer software product is stored in a storage medium, including several instructions to cause a computer device (which may be a personal computer, a server, or a network device, etc.) to execute all or part of the steps of the methods described in various embodiments of the present application. The aforementioned storage medium includes: U disk, mobile hard disk, read-only memory (ROM), random access memory (RAM), magnetic disk or optical disk and other medium that can store program code.

On the other hand, embodiments of the present application further provide a computer program product. The computer program product includes a computer program. The computer program can be stored on a non-transitory computer-readable storage medium. When the computer program is executed by a processor, the computer can execute the battery positioning method provided by the above methods. The method includes: prepositioning the battery and the battery gripper, determining the initial center position coordinate of the battery frame and the initial center position coordinate of the battery gripper, the battery gripper is used to grip the battery frame, and the plurality of distance detection apparatuses are provided on the battery gripper; the battery gripper is controlled to move from the initial center position coordinate of the battery gripper to the battery along the transportation direction of the battery. Walk at the coordinates of the initial center position of the battery frame; when the battery gripper walks to the target position, control the battery gripper along the direction perpendicular to the transportation direction from the target position to the coordinates of the initial center position of the battery frame Translation; when the battery gripper is translated, based on the detection results of the plurality of distance detection apparatuses, the first short side of the battery frame and the first long side perpendicular to the first short side are respectively obtained by fitting or the second long side; based on the preset battery frame size, the first short side, the first long side or the second long side, the actual center position coordinate of the battery frame are obtained by fitting.

On the other hand, embodiments of the present application also provide a non-transitory computer-readable storage medium on which a computer program is stored. The computer program is implemented when executed by a processor to perform the battery positioning method provided by each of the above methods.

The method includes: prepositioning a battery and a battery gripper, determining an initial center position coordinate of a battery frame and an initial center position coordinate of the battery gripper, the battery gripper is configured to grip the battery frame, and a plurality of distance detection apparatuses are provided on the battery gripper; controlling the battery gripper to walk along a transportation direction of the battery from the initial center position coordinate of the battery gripper to the initial center position coordinate of the battery frame; in response to the battery gripper walking to a target position, controlling the battery gripper to translate from the target position to the initial center position coordinate of the battery frame along a vertical direction of the transportation direction; in response to the battery gripper being translating, fitting to obtain a first short side of the battery frame and a first long side perpendicular to the first short side or a second long side respectively based on a detection result of the plurality of distance detection apparatuses; and fitting to obtain an actual center position coordinate of the battery frame based on a preset battery frame size, the first short side, the first long side or the second long side.

The apparatus embodiments described above are only illustrative. The units described as separate components may or may not be physically separated. The components shown as units may or may not be physical units, that is, they may be located in one location, or it can be distributed across the plurality of network units. Some or all of the modules can be selected according to actual needs to achieve the purpose of the solution of this embodiment. Those of ordinary skill in the art can understand and implement the method without any creative effort.

Through the above description of the embodiments, those skilled in the art can clearly understand that each embodiment can be implemented by software plus a necessary general hardware platform, and of course, it can also be implemented by hardware. Based on this understanding, the part of the above technical solution that essentially contributes to the existing technology can be embodied in the form of a software product. The computer software product can be stored in a computer-readable storage medium, such as ROM/RAM, magnetic disc, optical disk, etc., including a plurality of instructions to cause a computer device (which can be a personal computer, a server, or a network device, etc.) to execute the methods described in various embodiments or certain parts of the embodiments.

Finally, it should be noted that the above embodiments are only used to illustrate the technical solution of the present application, but not to limit the present application. Although the present application has been described in detail with reference to the foregoing embodiments, those of ordinary skill in the art should understand that modifications may still be made to the technical solutions described in the foregoing embodiments, or equivalent substitutions may be made to some of the technical features. However, these modifications or substitutions do not cause the essence of the corresponding technical solutions to deviate from the spirit and scope of the technical solutions of the embodiments of the present application.

## Claims

1. A battery positioning method, **characterized by** comprising:
prepositioning a battery and a battery gripper, determining an initial center position coordinate of a battery frame and an initial center position coordinate of the battery gripper, wherein the battery gripper is configured to grip the battery frame, and a plurality of distance detection apparatuses are provided on the battery gripper;
controlling the battery gripper to walk along a transportation direction of the battery from the initial center position coordinate of the battery gripper to the initial center position coordinate of the battery frame;
in response to the battery gripper walking to a target position, controlling the battery gripper to translate from the target position to the initial center position coordinate of the battery frame along a direction perpendicular to the transportation direction;
in response to the battery gripper being translating, fitting to obtain a first short side of the battery frame and a first long side perpendicular to the first short side or a second long side respectively based on a detection result of the plurality of distance detection apparatuses; and
fitting to obtain an actual center position coordinate of the battery frame based on a preset battery frame size, the first short side, the first long side or the second long side.

2. The battery positioning method according to claim 1, wherein the gripper and the battery frame are both rectangular frames, and the rectangular frame comprises a first short side, a first long side, and a second short side and a second long side connected in sequence;
a first distance detection apparatus is provided on the first short side of the battery gripper, a second distance detection apparatus is provided on the second short side, and a third distance detection apparatus and a fourth distance detection apparatus are provided on the first long side; and a fifth distance detection apparatus and a sixth distance detection apparatus are provided on the second long side.

3. The battery positioning method according to claim 2, wherein the plurality of distance detection apparatuses comprise at least two distance detection apparatuses,
wherein the fitting to obtain the first short side of the battery frame based on the detection result of the plurality of distance detection apparatuses comprises:
in response to detecting that the at least two distance detection apparatuses pass the first short side, determining a short side position coordinate of each of the at least two distance detection apparatuses when passing the first short side; and
fitting to obtain the first short side by using a least squares method based on at least two short side position coordinates.

4. The battery positioning method according to claim 3, wherein the fitting to obtain the first long side perpendicular to the first short side or the second long side based on the detection result of the plurality of distance detection apparatuses comprises:
determining an inclination angle of the battery gripper relative to the battery frame based on the at least two short side position coordinates, and rotating the battery gripper based on the inclination angle;
in response to that a rotation of the battery gripper is completed, determining long side detection results of the third distance detection apparatus, the fourth distance detection apparatus, the fifth distance detection apparatus and the sixth distance detection apparatus respectively;
controlling the battery gripper to walk toward a long side of the battery frame that is not detected based on the long side detection result;
in response to detecting that the at least two distance detection apparatuses pass through the first long side or the second long side, determining a long side position coordinate of each of the distance detection apparatus when passing through the first long side or the second long side; and
fitting to obtain the first long side perpendicular to the first short side or the second long side by using the least squares method based on at least two long side position coordinates.

5. The battery positioning method according to claim 1, wherein after the fitting to obtain the actual center position coordinate of the battery frame, the method further comprises:
determining each axis coordinate of a moving apparatus of the battery gripper through coordinate transformation based on the actual center position coordinate of the battery frame; and
controlling the current center position coordinate of the battery gripper to move to the actual center position coordinate of the battery frame based on the each axis coordinate.

6. The battery positioning method according to claim 5, wherein after controlling the current center position coordinate of the battery gripper to move to the actual center position coordinate of the battery frame, the method further comprises:
detecting the detection result of each distance detection apparatus in the plurality of distance detection apparatuses;
in response to each detection result being less than a preset value, determining that a battery gripper position calibration is completed, and
in response to there is detection result being greater than or equal to the preset value, adjusting the battery gripper position.

7. A battery positioning apparatus, **characterized by** comprising:
a prepositioning module, configured to preposition a battery and a battery gripper, and determine an initial center position coordinate of a battery frame of the battery and an initial center position coordinate of the battery gripper, wherein the battery gripper is configured to grip the battery frame, and a plurality of distance detection apparatuses are provided on the battery gripper;
a control module, configured to control the battery gripper to walk along a transportation direction of the battery from the initial center position coordinate of the battery gripper to the initial center position coordinate of the battery frame; and in response to the battery gripper walking to a target position, control the battery gripper to translate from the target position to the initial center position coordinate of the battery frame along a direction perpendicular to the transportation direction; and
a fitting module, configured to in response to the battery gripper being translating, fit to obtain a first short side of the battery frame and a first long side perpendicular to the first short side or a second long side respectively based on a detection result of the plurality of distance detection apparatuses in response to the battery gripper being translating; and fit to obtain an actual center position coordinate of the battery frame based on a preset battery frame size, the first short side, the first long side or the second long side.

8. The battery positioning apparatus according to claim 7, wherein the gripper and the battery frame are both rectangular frames, and the rectangular frame comprises a first short side, a first long side, and a second short side and a second long side connected in sequence;
a first distance detection apparatus is provided on the first short side of the battery gripper, a second distance detection apparatus is provided on the second short side, and a third distance detection apparatus and a fourth distance detection apparatus are provided on the first long side; and a fifth distance detection apparatus and a sixth distance detection apparatus are provided on the second long side.

9. The battery positioning apparatus according to claim 8, wherein the plurality of distance detection apparatuses comprise at least two distance detection apparatuses,
wherein the fitting module, configured to in response to detecting that the at least two distance detection apparatuses pass the first short side, determine a short side position coordinate of each of the at least two distance detection apparatuses when passing the first short side; and
fit to obtain the first short side by using a least squares method based on at least two short side position coordinates.

10. The battery positioning apparatus according to claim 9, wherein the fitting module is further configured to determine an inclination angle of the battery gripper relative to the battery frame based on the at least two short side position coordinates, and rotate the battery gripper based on the inclination angle;
in response to that a rotation of the battery gripper is completed, determine long side detection results of the third distance detection apparatus, the fourth distance detection apparatus, the fifth distance detection apparatus and the sixth distance detection apparatus respectively; and
control the battery gripper to walk toward a long side of the battery frame that is not detected based on the long side detection result;
in response to detecting that the at least two distance detection apparatuses pass through the first long side or the second long side, determine a long side position coordinate of each of the distance detection apparatus when passing through the first long side or the second long side; and
fit to obtain the first long side perpendicular to the first short side or the second long side by using the least squares method based on at least two long side position coordinates.

11. The battery positioning apparatus according to claim 7, further comprising a grabbing module,
wherein, the grabbing module is configured to determine each axis coordinate of a moving apparatus of the battery gripper through coordinate transformation based on the actual center position coordinate of the battery frame; and
control the current center position coordinate of the battery gripper to move to the actual center position coordinate of the battery frame based on the each axis coordinate.

12. The battery positioning apparatus according to claim 11, further comprising a calibration module,
wherein, the calibration module is configured to detect the detection result of each distance detection apparatus in the plurality of distance detection apparatuses;
in response to each detection result being less than a preset value, determine that a battery gripper position calibration is completed, and
in response to there is detection result being greater than or equal to the preset value, adjust the battery gripper position.

13. An electronic device, **characterized by** comprising:
a memory;
a processor; and
a computer program stored on the memory and executable on the processor,
wherein when the program is executed by the processor, the battery positioning method according to any one of claims 1 to 6 is realized.

14. A non-transitory computer-readable storage medium, **characterized in that**, a computer program is stored on the non-transitory computer-readable storage medium, and when the computer program is executed by a processor, the battery positioning method according to any one of claims 1 to 6 is realized.

15. A battery replacement station, **characterized in that**, the battery replacement station is configured to perform battery positioning method according to any one of claims 1 to 6 for battery replacement.
